# FASCICULE DE BREVET EUROPEEN

(11) **EP 0 551 911 B1**
(45) Date de publication et mention de la délivrance du brevet: **27.08.1997**
(21) Numéro de dépôt: 93100558.1
(22) Date de dépôt: 15.01.1993
(51) Int. Cl.: A21B 2/00, H05B 6/80

(54) **Machine de décongélation et de réchauffage d'une préparation alimentaire surgelée**
Gerät zum Auftauen und Erwärmen tiefgefrorener Nahrungsmittel
Apparatus for thawing and heating of frozen food

(30) Priorité: 17.01.1992 FR 9200479
(43) Date de publication de la demande: 21.07.1993
(73) Titulaire: MOULINEX S.A., F-93170 Bagnolet (FR)
(72) Inventeur: Chartrain, Pierre, F-14540 Soliers Bourguebus (FR); Guilgue, Jean-Louis Marcel René, F-14440 Beny sur Mer (FR)
(74) Mandataire: May, Hans Ulrich, Dr.

(56) Documents cités:
- GB-A- 664 207
- GB-A- 2 179 732
- US-A- 2 716 694
- US-A- 3 402 277

## Description

L'invention se rapporte à une machine de décongélation et de réchauffage d'une préparation alimentaire surgelée, comportant un boîtier renfermant une enceinte de chauffage équipée d'un support pour la préparation alimentaire surgelée, qui est délimitée par une paroi tubulaire, un fond et une porte mobile, et qui est soumise, d'une part, à un rayonnement micro-ondes sortant de deux débouchés pratiqués dans la paroi tubulaire et reliés à une paire de guides d'ondes rattachée à un générateur de micro-ondes, et, d'autre part, à un rayonnement infrarouge émis par deux unités de chauffage s'étendant axialement à la paroi tubulaire et situées de part et d'autre du support en deux régions opposées de ladite paroi tubulaire.

On connaît déjà par le document US-A-4 775 770 l'utilisation d'au moins un générateur relié à une paire de guides d'ondes de manière à créer un champ cumulatif de haute fréquence concentré sur la préparation alimentaire à traiter. On connaît également par les documents US-A-2 176 964 et EP-A-0 053 189 un four à micro-ondes comportant des moyens de chauffage à infrarouge. Mais, bien que chacune des réalisations décrites dans ces documents permettent de réduire le temps de chauffage de la préparation alimentaire, aucune ne permet d'obtenir de façon satisfaisante une décongélation et un réchauffage ultra-rapide, tout en offrant un aspect doré de grillage.

Le but de la présente invention est de réaliser une machine qui puisse être utilisée par un public généralement pressé, tel que, par exemple, celui des aéroports ou gares, et dont le cycle de fonctionnement pour une préparation alimentaire soit compris entre 30 secondes et une minute.

Selon l'invention, l'enceinte présentant une capacité réduite et ayant une région centrale dans laquelle est placé le support, les débouchés des guides d'ondes sont situés de part et d'autre du support en deux régions opposées distinctes de celles des deux unités de chauffage, et les deux unités de chauffage comportent chacune au moins une rampe à infrarouge.

Ainsi, on comprend que par l'opposition deux à deux des débouchés des guides d'ondes et des rampes à infrarouge par rapport au support de la préparation, on obtient une concentration maximale des rayonnements dans la région centrale de l'enceinte dans laquelle est placé le support de la préparation, et donc une homogénéisation ultra-rapide du réchauffement de la préparation tout en apportant pour certaines préparations l'aspect doré d'une bonne cuisson.

Les caractéristiques et avantages de l'invention ressortiront d'ailleurs de la description qui va suivre, à titre d'exemple, en référence aux dessins annexés dans lesquels :

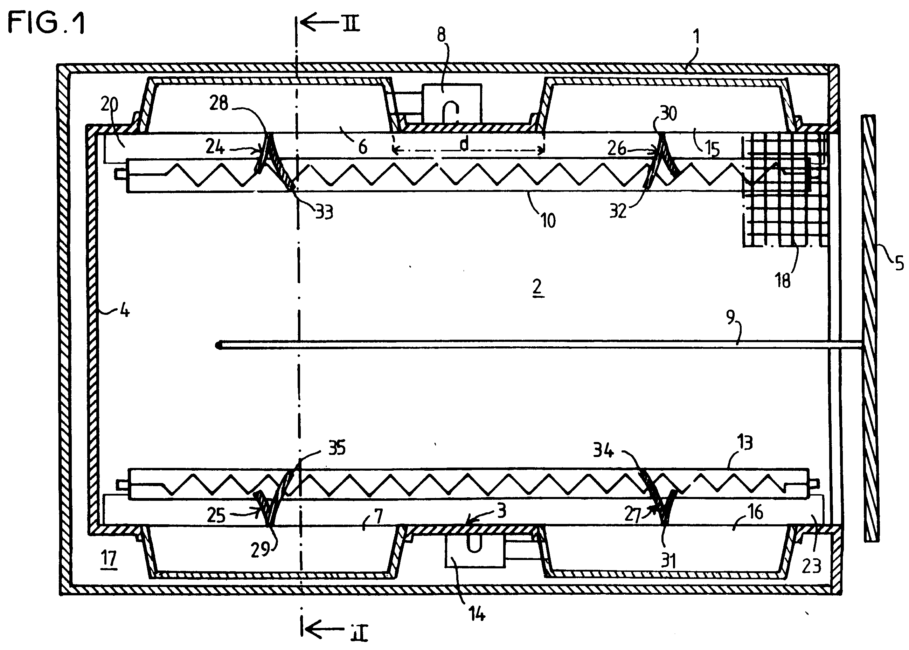

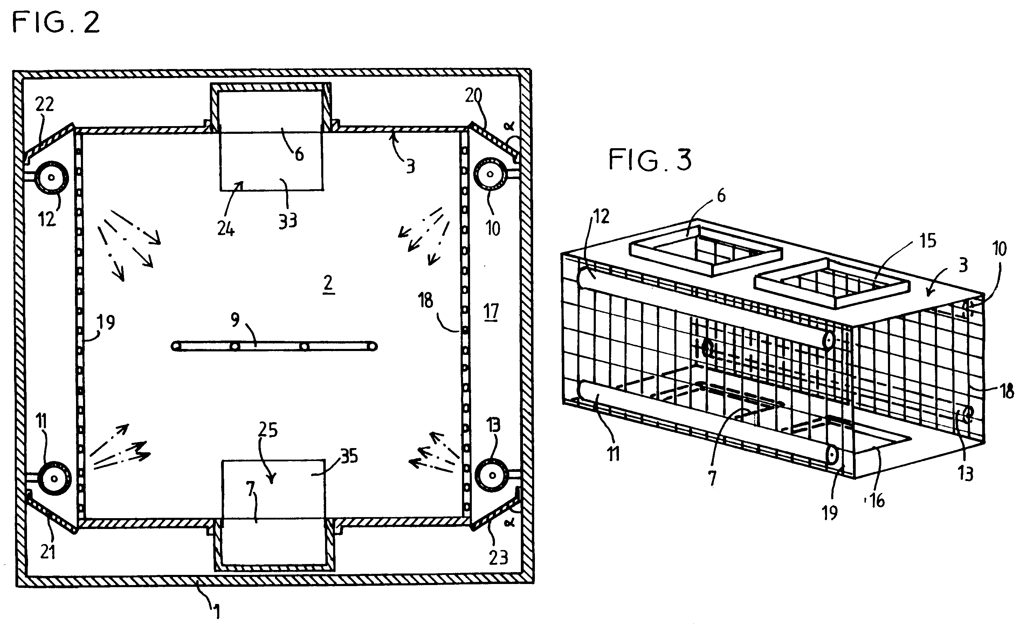

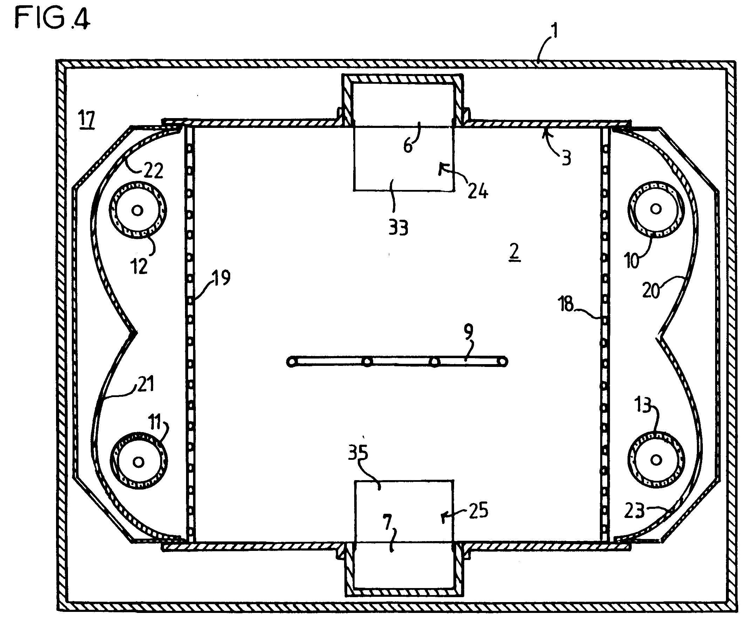

la figure 1 représente en coupe verticale l'enceinte et le boîtier d'une machine selon l'invention ; la figure 2 est une coupe transversale selon la ligne II-II de la figure 1 ; la figure 3 représente, à plus petite échelle une perspective de la paroi tubulaire de l'enceinte équipée de rampes à infrarouge ; la figure 4 est une coupe transversale analogue à la figure 2 d'une variante de réalisation d'une machine selon l'invention.

Comme représenté à la figure 1, la machine de décongélation et de réchauffage d'une préparation alimentaire surgelée, comporte un boîtier 1 renfermant une enceinte de chauffage 2 qui est délimitée par une paroi tubulaire 3, un fond 4 et une porte mobile 5, et qui est soumise, d'une part, à un rayonnement micro-ondes sortant de deux débouchés 6 et 7 pratiqués dans la paroi tubulaire et reliés à une paire de guides d'ondes rattachée à un générateur de micro-ondes schématisé en 8, et, d'autre part, à un rayonnement infrarouge émis par des moyens de chauffage, ladite enceinte 2 étant équipée d'un support 9 pour la préparation surgelée.

Une telle paire de guide d'ondes rattaché à un générateur de micro-ondes a, par exemple, été décrit dans le brevet US 4.775.770.

Dans l'exemple de réalisation décrit le rayonnement microondes est émis par un magnétron selon une longueur d'onde de 2450 Mhz et le rayonnement infrarouge, est émis par des rampes à enveloppe tubulaire du type à quartz, et de préférence par des tubes à halogène présentant une longueur d'onde de l'ordre de 12.10⁵ Ghz.

Selon l'invention, l'enceinte 2 présentant une capacité réduite dont la région centrale reçoit le support 9, les débouchés 6 et 7 des guides d'ondes sont répartis sur deux régions opposées de ladite paroi tubulaire 3 situées de part et d'autre de la région centrale, et les moyens de chauffage à infrarouge comportent au moins deux rampes 10 et 11 s'étendant axialement à la paroi tubulaire et réparties de part et d'autre de la région centrale en deux régions opposées distinctes de celles des débouchés 6 et 7 des guides d'ondes. A titre d'exemple non limitatif, la capacité de l'enceinte est de l'ordre de 5dm³.

Selon une autre caractéristique avantageuse de l'invention, les moyens de chauffage comportent deux rampes supplémentaires à infrarouge 12 et 13 constituant ainsi un ensemble de quatre rampes à infrarouge disposées axialement à la paroi tubulaire et respectivement répartis deux à deux dans les régions haute et basse de l'enceinte 2, tandis que les deux débouchés 6 et 7 des guides d'ondes sont situés dans le sens transversal à la paroi 3 respectivement dans des régions médianes comprises entre deux rampes consécutives 10-12 ou 11-13. En outre, le boîtier 1 comporte un générateur supplémentaire de micro-ondes schématisé en 14 et rattaché à une paire supplémentaire de guides d'ondes dont les débouchés 15 et 16 pratiqués dans la paroi tubulaire 3 sont agencés respectivement à côté des autres débouchés 6 et 7 à une distance d telle que le rayonnement de deux débouchés voisins 6-15 ou 7-16 soit concentré sur toute l'étendue axiale du support 9. Comme on le comprendra, cette distance d est choisie en fonction de l'étendue axiale de chacun des débouchés voisins 6-15 ou 7-16.

Dans l'exemple particulier illustré sur les figures 2 et 3, le boitier 1 et la paroi 3 de l'enceinte 2 présentent chacun une forme parallélipipédique, et ménagent entre-eux un espace 17 dans lequel sont disposées les rampes à halogène 10 à 13. Cet espace peut-être parcouru par un courant d'air de refroidissement créé par un dispositif de ventilation non représenté. De manière à permettre le rayonnement infrarouge dans l'enceinte 2, la paroi de l'enceinte située en regard des moyens de chauffage à infrarouge et constituant également les deux côtés latéraux 18 et 19 de l'enceinte est une région étanche aux micro-ondes et transparente au rayonnement infrarouge. Ces côtés 18 et 19 sont réalisés chacun par un grillage à mailles fines adapté à arrêter le rayonnement micro-ondes.

En outre, comme on le voit bien sur la figure 2, chaque rampe à tube à halogène 10 à 13, est équipée d'un réflecteur 20, 21, 22, 23, qui s'étend longitudinalement à la rampe et qui est agencé entre le boîtier 1 et la face externe du côté correspondant 18 ou 19. Chaque réflecteur est disposé par rapport à la paroi du boîtier selon un angle α choisi de manière que le réflecteur réfléchisse le rayonnement infrarouge du tube vers la région centrale de l'enceinte et donc sur la préparation alimentaire surgelée reposant sur le support 9.

Selon une variante illustrée à la figure 4, et dans laquelle les pièces similaires à celles de la figure 2 ont gardé les mêmes références, on a donné aux réflecteurs 20 à 23 une forme pratiquement parabolique de manière, d'une part, à capter tout le rayonnement arrière des tubes à halogène, et d'autre part, à réfléchir ce rayonnement vers la région centrale. Ainsi, les quatres paraboles permettent d'obtenir un recouvrement des rayonnements dans la région centrale de l'enceinte 2.

Selon une autre caractéristique de l'invention, chaque débouché 6,7 ou 15,16 comporte un déflecteur 24, 25, 26, 27 agencé dans un plan transversal au support 9 de manière à favoriser la répartition du rayonnement micro-ondes. Comme représenté, chaque débouché ayant une forme rectangulaire, le déflecteur est agencé selon la médiatrice des petits côtés et est constitué par une tôle pliée en V dont l'arête de sommet 28, 29, 30, 31 est située en amont dans le guide d'ondes, tandis que les deux branches du V s'étendent vers l'intérieur de l'enceinte 2.

En outre, les essais ont montré, que dans le cas où la préparation alimentaire surgelée présente une forme oblongue, par exemple un hot-dog, il est nécessaire, pour obtenir une homogénéisation rapide de la température, de favoriser une concentration de micro-ondes vers la partie centrale. Aussi, les branches 32, 33 et 34, 35, situées en regard l'une de l'autre dans le sens axial présentent une longueur plus grande que les autres branches créant ainsi une asymétrie propice à la concentration des micro-ondes vers la région centrale de l'enceinte.

On va maintenant décrire, selon un mode préférentiel de réalisation de la machine avec quatre rampes à infrarouge et deux magnétrons, le procédé de chauffage utilisé pour obtenir les meilleurs résultats.

Après avoir enfourné la préparation alimentaire posée sur le support 9, on referme la porte 5 et, on enclenche la mise en marche des magnétrons et des rampes à halogène au moyen d'un dispositif de commande (non représenté). Puis pendant la durée d'un cycle de décongélation et de réchauffage, on produit simultanément un rayonnement micro-ondes continu en alimentant de façon alternée les deux générateurs 8 et 14 branchés à cet effet en anti-parallèle, et un rayonnement infrarouge continu.

Grâce à cette combinaison particulière des quatre débouchés micro-ondes et des quatre tubes à halogène, on obtient, avec des magnétrons classiques permettant d'obtenir chacun une puissance restituée voisine de 850W et des tubes à halogène de l'ordre de 500W, une puissance micro-ondes restituée de l'ordre de 1700W et une puissance infrarouge de l'ordre de 2000W. Ainsi, la concentration des rayonnements micro-ondes et infrarouge sur la préparation alimentaire, permet une décongélation et un réchauffage ultra-rapide de l'ordre de 30 secondes à une température voisine finale de 60°C, tout en apportant pour certaines préparation l'aspect doré d'une bonne cuisson grâce aux tubes à halogène.

Dans le cas ou la machine est équipée d'un seul magnétron, on comprendra que le rayonnement micro-ondes est pulsé et que l'on doit alors utiliser un magnétron plus important susceptible de produire dans l'enceinte une puissance restituée de l'ordre de 1700W.

## Revendications

1. Machine de décongélation et de réchauffage d'une préparation alimentaire surgelée, comportant un boîtier (1) renfermant une enceinte de chauffage (2) équipée d'un support (9) pour la préparation alimentaire surgelée, qui est délimitée par une paroi tubulaire (3), un fond (4) et une porte mobile (5), et qui est soumise, d'une part, à un rayonnement micro-ondes sortant de deux débouchés (6 et 7) pratiqués dans la paroi tubulaire et reliés à une paire de guides d'ondes rattachée à un générateur (8) de micro-ondes, et, d'autre part, à un rayonnement infrarouge émis par deux unités de chauffage s'étendant axialement à la paroi tubulaire (3) et situées de part et d'autre du support (9) en deux régions opposées de ladite paroi tubulaire (3),
**caractérisée en ce que** l'enceinte (2) présentant une capacité réduite et ayant une région centrale dans laquelle est placé le support (9), les débouchés (6 et 7) des guides d'ondes sont situés de part et d'autre du support (9) en deux régions opposées distinctes de celles des deux unités de chauffage, et les deux unités de chauffage comportent chacune au moins une rampe à infrarouge (10;11).

2. Machine selon la revendication 1,
**caractérisée en ce que** les deux unités de chauffage comportent chacune une rampe supplémentaire (12;13) à infrarouge constituant ainsi un ensemble de quatre rampes à infrarouge disposées axialement à la paroi tubulaire (3) et respectivement réparties deux à deux dans les régions haute et basse de l'enceinte (2), tandis que les deux débouchés (6 et 7) des guides d'ondes sont situés dans le sens transversal à la paroi (3) respectivement dans des régions médianes comprises entre deux rampes consécutives (10-12 ou 11-13).

3. Machine selon la revendication 2,
**caractérisée en ce que** chaque rampe (10 à 13) est équipée d'un réflecteur (20 à 23) destiné à réfléchir le rayonnement infrarouge vers la région centrale de l'enceinte.

4. Machine selon les revendications 1 à 3,
**caractérisée en ce que** le boîtier (1) comporte un générateur supplémentaire (14) de micro-ondes rattaché à une paire supplémentaire de guides d'ondes dont les débouchés (15 et 16) pratiqués dans la paroi tubulaire (3) sont agencés respectivement à côté des autres débouchés (6 et 7) à une distance (d) telle que le rayonnement de deux débouchés voisins (6-15 ou 7-16) soit concentré sur toute l'étendue axiale du support (9).

5. Machine selon la revendication 4,
**caractérisée en ce que** chaque débouché (6, 7, 15, 16) comporte un déflecteur (24, 25, 26, 27) agencé dans un plan transversal au support (9) de manière à favoriser la répartition du rayonnement micro-ondes.

6. Machine selon la revendication 5,
**caractérisée en ce que** chaque débouché (6, 7, 15, 16) présentant une forme rectangulaire, chaque déflecteur (24, 25, 26, 27) est agencé selon la médiatrice des petits côtés et est constitué par une tôle pliée en V dont l'arête de sommet (28, 29, 30, 31) est située en amont dans le guide d'ondes, tandis que les branches du V s'étendent vers l'intérieur de l'enceinte (2).

7. Machine selon la revendication 6,
**caractérisée en ce que** les branches (32, 33 et 34, 35) situées en regard l'une de l'autre dans le sens axial présentent une longueur plus grande que les autres branches.

8. Machine selon l'une quelconque des revendications précédentes,
**caractérisée en ce que** les deux unités de chauffage à infrarouge (10;11) étant disposées respectivement dans un espace (17) ménagé entre l'enceinte (2) et le boîtier (1), la paroi de l'enceinte (3) située en regard des unités de chauffage comporte respectivement des régions (18, 19) étanches aux micro-ondes et transparentes au rayonnement infrarouge.

9. Machine selon la revendication 8,
**caractérisée en ce que** les régions(18, 19) de la paroi étanches aux micro-ondes sont réalisées chacune par un grillage à mailles fines adaptées à arrêter le rayonnement micro-ondes.

10. Machine selon l'une quelconque des revendications précédentes,
**caractérisée en ce que** le rayonnement micro-ondes émis par un magnétron a une longueur d'onde de 2450 Mhz et le rayonnement infrarouge est émis par des rampes à enveloppe tubulaire du type à quartz, et de préférence par des tubes à halogène présentant une longueur d'onde de l'ordre de 12.10⁵ Ghz.

## Claims

1. Machine for defrosting and reheating a frozen food preparation, having a housing (1) enclosing a heating chamber (2) equipped with a support (9) for the frozen food preparation, which is delimited by a tubular wall (3), a base (4) and a movable door (5), and which is subjected, on the one hand, to microwave radiation coming out of two outlets (6 and 7) formed in the tubular wall and connected to a pair of waveguides attached to a microwave generator (8), and, on the other hand, to infrared radiation emitted by two heating units extending axially to the tubular wall (3) and situated on both sides of the support (9) in two opposing regions of the said tubular wall (3,
**characterised in that,** the chamber (2) having a reduced capacity and having a central region in which the support is placed (9), the outlets (6 and 7) of the waveguides are situated on both sides of the support (9) in two opposing regions separate from those of the two heating units, and the two heating units each have at least one infrared bank (10; 11).

2. Machine according to Claim 1,
**characterised in that** the two heating units each have a supplementary infrared heating bank (12; 13), thus constituting an assembly of four infrared banks disposed axially to the tubular wall (3) and respectively distributed in pairs in the high and low regions of the chamber (2), whilst the two outlets (6 and 7) of the waveguides are situated in the direction transverse to the wall (3) respectively in middle regions between two consecutive banks (10-12 or 11-13).

3. Machine according to Claim 2,
**characterised in that** each bank (10 to 13) is equipped with a reflector (20 to 23) designed to reflect the infrared radiation towards the central region of the chamber.

4. Machine according to Claims 1 to 3,
**characterised in that** the housing (1) has a supplementary microwave generator (14) attached to a supplementary pair of waveguides, whose outlets (15 and 16) formed in the tubular wall (3) are arranged respectively alongside the other outlets (6 and 7) at a distance (d) such that the radiation from two adjacent outlets (6-15 or 7-16) is concentrated over the entire axial extent of the support (9).

5. Machine according to Claim 4,
**characterised in that** each outlet (6, 7, 15, 16) has a deflector (24, 25, 26, 27) arranged in a plane transverse to the support (9) so as to promote the distribution of the microwave radiation.

6. Machine according to Claim 5,
**characterised in that,** each outlet (6, 7, 15, 16) having a rectangular shape, each deflector (24, 25, 26, 27) is arranged along the mid-perpendicular of the small sides and is formed by a sheet folded into a V whose apex (28, 29, 30, 31) is situated upstream in the waveguide, whilst the two legs of the V extend into the chamber (2).

7. Machine according to Claim 6,
**characterised in that** the legs (32, 33 and 34, 25) situated facing each other in the axial direction have a longer length than the other legs.

8. Machine according to any one of the preceding Claims,
**characterised in that,** the two infrared heating units (10; 11) being disposed respectively in a space (17) formed between the chamber (2) and the housing (1), the wall of the chamber (3) situated facing the heating units has respectively regions (18, 19) which are impermeable to microwaves and transparent to infrared radiation.

9. Machine according to Claim 8,
**characterised in that** the regions (18, 19) of the wall which are impermeable to microwaves are produced by a fine-meshed grille adapted to stop microwave radiation.

10. Machine according to any one of the preceding claims,
**characterised in that** the microwave radiation emitted by a magnetron has a wavelength of 2450 MHz and the infrared radiation is emitted by banks with a tubular casing of the quartz type, and preferably by halogen tubes having a wavelength of the order of 12.10⁵ GHz.

## Patentansprüche

1. Gerät zum Auftauen und Erhitzen einer tiefgefrorenen Lebensmittelzubereitung mit einem Gehäuse (1), das einen mit einem Träger (9) für die Lebensmittelzubereitung ausgestatteten Heizraum (2) umschließt, der begrenzt ist durch eine rohrförmioge Wand (3), eine Rückwand (4) und eine bewegliche Tür (5) und der einerseits der Strahlung von Mikrowellen ausgesetzt ist, die aus zwei Mündungen (6 und 7) austreten, die in der rohrförmigen Wand ausgebildet und mit zwei Wellenleitern verbunden sind, die an einen Mikrowellen-Generator (8) angeschlossen sind, und andererseits einer Infrarotstrahlung ausgesetzt ist, die durch zwei Heizelemente ausgesandt wird, die sich axial zur rohrförmigen Wand (3) erstrecken und auf beiden Seiten des Trägers (9) in zwei entgegengesetzten Bereichen der rohrförmigen Wand (3) angeordnet sind, **dadurch gekennzeichnet, daß** der Heizraum (2) eine geringe Kapazität und einen Mittelbereich aufweist, in welchem der Träger (9) angeordnet ist, und die Mündungen (6 und 7) der Wellenleiter auf beiden Seiten des Trägers (9) in zwei entgegengesetzten Bereichen angeordnet sind, die sich von denen der beiden Heizeinheiten unterscheiden, und die beiden Heizeinheiten jede mindestens eine Infrarötröhre (10; 11) aufweisen.

2. Gerät nach Anspruch 1, **dadurch gekennzeichnet, daß** die beiden Heizeinheiten jeweils eine zusätzliche Infrarotröhre (12; 13) aufweisen, wodurch eine Anordnung von vier Infrarotröhren gebildet wird, die axial zur rohrförmigen Wand (3) angeordnet sind und von denen jeweils zwei im oberen und zwei im unteren Bereich des Heizraums (2) verteilt sind, wohingegen die beiden Mündungen (6 und 7) der Wellenleiter quer zur Wand (3) und jeweils in den Mittelbereichen angeordnet sind, die sich zwischen den aufeinanderfolgenden Infrarotföhren (10-12 oder 11-13) befinden.

3. Gerät nach Anspruch 2, **dadurch gekennzeichnet, daß** jede Röhre (10 bis 13) mit einem Reflektor (20 bis 23) versehen ist, der die Infrarotstrahlung auf den Mittelbereich des Heizraums reflektiert.

4. Gerät nach einem der Ansprüche 1 bis 3, **dadurch gekennzeichnet, daß** das Gehäuse (1) einen zusätzlichen Mikrowellen-Generator (14) aufweist, der mit einem zusätzlichen Paar Wellenleiter verbunden ist, deren in der rohrförmigen Wand (3) ausgebildete Mündungen (15 und 16) jeweils neben den anderen Mündungen (6 und 7) mit einem Abstand (d) angeordnet sind, so daß die Strahlung zweier benachbarter Mündungen (6-15 oder 7-16) auf die gesamte axiale Länge des Trägers (9) konzentriert wird.

5. Gerät nach Anspruch 4, **dadurch gekennzeichnet, daß** jede Mündung (6, 7, 15, 16) einen Deflektor (24, 25, 26, 27) aufweist, der in einer Ebene quer zum Träger (9) angeordnet ist, so daß die Verteilung der Mirkowellenstrahlung begünstigt wird.

6. Gerät nach Anspruch 5, **dadurch gekennzeichnet, daß** jede Mündung (6, 7, 15 , 16) eine rechteckige Form aufweist und jeder Deflektor (24, 25, 26, 27) entlang der Mittelsenkrechten der kurzen Seiten angeordnet und durch ein zu einem V gefalzten Blech gebildet ist, dessen Spitze (28, 29, 30, 31) stromaufwärts im Wellenleiter angeordnet ist, während die beiden Äste des V sich ins Innere des Heizraums (2) erstrecken.

7. Gerät nach Anspruch 6, **dadurch gekennzeichnet, daß** die Äste (32, 33 und 34, 35), die in axialer Richtung einander gegenüberliegend angeordnet sind, länger sind als die anderen Äste.

8. Gerät nach einem der vorangehenden Ansprüche, **dadurch gekennzeichnet, daß** die beiden Infrarot-Heizelemente (10;11) jeweils in einem Raum (17) angeordnet sind, der zwischen dem Heizraum (2) und dem Gehäuse (1) gebildet ist, und die gegenüber den Heizelementen angeordnete Wand (3) des Heizraums jeweils für Mikrowellen undurchlässige und für Infrarotstrahlung durchlässige Bereiche (18, 19) aufweist.

9. Gerät nach Anspruch 8, **dadurch gekennzeichnet, daß** die für Mikrowellen undurchlässigen Bereiche (18, 19) der Wand jeweils durch ein Gitter mit feinen Maschen gebildet sind, die die Mikrowellenstrahlung stoppen können.

10. Gerät nach einem der vorangehenden Ansprüche, **dadurch gekennzeichnet, daß** die vom Magnetron ausgesandte Mikrowellenstrahlung eine Wellenlänge von 2450 Mhz hat und die Intrarotstrahlung von Infrarotröhren mit Quarzrohrmantel, vorzugsweise von Halogenröhren mit einer Wellenlänge von um die 12 x 10⁵ Ghz abgegeben wird.
